# EUROPÄISCHE PATENTANMELDUNG

(11) **EP 2 180 658 A1**
(43) Veröffentlichungstag der Anmeldung: **28.04.2010**
(21) Anmeldenummer: 09173805.4
(22) Anmeldetag: 22.10.2009
(51) Int. Cl.: H04L 29/06, H04L 29/12

(54) **Vorrichtung und Verfahren zur Freigabe von lokalen Dateninhalten für einen IP-basierten Datenzugriff, zugehöriges Kommunikationssystem, digitales Speichermedium, Computer-Programm-Produkt und Computer-Programm**

(30) Priorität: 27.10.2008 DE 102008053354
(71) Anmelder: Gigaset Communications GmbH, 81379 München (DE)
(72) Erfinder: Euscher, Christoph, 46414, Rhede (DE); Goertz, Werner, 46282, Dorsten (DE); Winkler, Andreas, 41065, Mönchengladbach (DE); Bigalke, Olaf, 58638, Iserlohn (DE); Exeler, Frank, 48431 Rheine (DE)
(74) Vertreter: Michalski, Stefan

(57) **Zusammenfassung**

Die vorliegende Erfindung betrifft eine Vorrichtung und ein Verfahren zur Freigabe von lokalen Dateninhalten für einen IP-basierten Datenzugriff, wobei eine Auswerteeinheit (2) eine erste IP-Verbindung (IP-V1) auswertet und eine IP-Zieladresse (IP:B) extrahiert und einer Berechtigungsnachweis-Erzeugungseinheit (3), die einen Berechtigungsnachweis (BN) für den Datenzugriff auf die lokale Speichereinheit (3), die einen Berechtigungsnachweis (BN) für den Datenzugriff auf die lokale Speichereinheit erzeugt. Eine Berechtigungsnachricht-Erzeugungseinheit (4) erzeugt eine Berechtigungsnachricht auf der Grundlage des Berechtigungsnachweises (BN) und der extrahierten IP-Zieladresse (IP:B). Eine Triggereinheit (5) löst einen Versendevorgang der erzeugten Berechtigungsnachricht über eine zweite IP-Verbindung (IP-V2) aus, welche von der ersten IP-Verbindung verschieden ist.

## Beschreibung

Die vorliegende Erfindung bezieht sich auf eine Vorrichtung und ein Verfahren zur Freigabe von lokalen Dateninhalten für einen IP-basierten Datenzugriff, sowie ein zugehöriges Kommunikationssystem, digitales Speichermedium, Computer-Programm-Produkt und Computer-Programm, und insbesondere auf eine Vorrichtung und ein Verfahren zur Realisierung einer vereinfachten Freigabe von Dateninhalten auf einem lokalen Medienserver unter Verwendung einer bereits bestehenden VoIP-Verbindung.

Zunehmend werden Festnetze, wie beispielsweise analoge Festnetze oder digitale Festnetze durch paketvermittelte Netze ersetzt oder zumindest ergänzt, wobei insbesondere paketvermittelte Netze gemäß dem Internetprotokoll (IP) verwendet werden.

In derartigen paketvermittelten Netzen werden in den meisten Ländern die öffentlichen IP-Adressen nur dynamisch vergeben, d.h. ein Netzwerkknoten bzw. ein sogenanntes Gateway bei einem Benutzer bekommt in der Regel alle 24 Stunden eine neue öffentliche IP-Adresse. Um auf die privaten Dateninhalte, z.B. Audio-, Video- und/oder Bild-Daten, eines Anbieters zugreifen zu können, muss der Zugreifende die öffentliche IP-Adresse des Anbieters kennen. Da diese jedoch täglich wechselt und nicht sofort ersichtlich ist, wird der auf die Dateninhalte über das paketvermittelte Netz Zugreifende vor eine nicht einfach zu lösende Hürde gestellt.

Derzeit existieren bereits Lösungen, wie z.B. DynDNS (Dynamic Domain Name System), die eine derartige dynamische IP-Adresse mit einem statischen Namen verknüpfen können. Nachteilig ist hierbei jedoch, dass dieser Dienst erst aufwändig konfiguriert werden muss und darüber hinaus nicht immer zuverlässig arbeitet. Insbesondere nach einem Wechsel der öffentlichen IP-Adresse dauert es oftmals bis zu mehreren Stunden, bis der statische Name mit der neuen IP-Adresse verknüpft und bei den DNS-Servern im paketvermittelten Netz, wie beispielsweise dem Internet, bekannt ist. Ist die Hürde mit der IP-Adresse überwunden, so muss der Zugreifende sich zusätzlich mit einer Benutzerkennung und einem Kennwort authentisieren. Ein derartiger Berechtigungsnachweis, welcher beispielsweise aus Benutzerkennung und Kennwort besteht, muss zuvor den Zugreifenden beispielsweise per e-Mail mitgeteilt werden.

Der Erfindung liegt die Aufgabe zugrunde, eine Vorrichtung und ein Verfahren zur Freigabe von lokalen Dateninhalten für einen IP-basierten Datenzugriff sowie ein zugehöriges Kommunikationssystem, digitales Speichermedium, Computer-Programm-Produkt und Computer-Programm zu schaffen, welches einen vereinfachten Zugriff sowie einen erhöhten Benutzerkomfort ermöglicht.

Erfindungsgemäß wird diese Aufgabe hinsichtlich der Vorrichtung durch die Merkmale des Patentanspruchs 1 hinsichtlich des Verfahrens durch die Maßnahmen des Patentanspruchs 7, hinsichtlich des Kommunikationssystems durch die Merkmale des Patentanspruchs 11, hinsichtlich des digitalen Speichermediums durch die Maßnahmen des Patentanspruchs 12, hinsichtlich des Computer-Programm-Produkts durch die Maßnahmen des Patentanspruchs 13 und hinsichtlich des Computer-Programms durch die Maßnahmen des Patentanspruchs 14 gelöst.

Erfindungsgemäß weist die Vorrichtung zur Freigabe von lokalen Dateninhalten für einen IP-basierten Datenzugriff eine lokale Speichereinheit zum Speichern der lokalen Dateninhalte, eine Auswerteeinheit zum Auswerten einer ersten IP-Verbindung und zum Extrahieren einer IP-Zieladresse, eine Berechtigungsnachweis-Erzeugungseinheit zum Erzeugen eines Berechtigungsnachweises für den Datenzugriff auf die Speicher-einheit und eine Berechtigungsnachricht-Erzeugungseinheit zum Erzeugen einer Berechtigungsnachricht auf der Grundlage des Berechtigungsnachweises und der extrahierten IP-Zieladresse auf. Eine Triggereinheit ermöglicht dann das Auslösen eines Versendevorgangs der erzeugten Berechtigungsnachricht über eine zweite IP-Verbindung, welche von der ersten IP-Verbindung verschieden ist. Auf diese Weise kann unter Ausnutzung einer bereits bestehenden IP-Verbindung, wie beispielsweise eine VoIP-Verbindung eine Berechtigungsnachricht generiert und unmittelbar an den Teilnehmer geschickt werden, mit dem bereits eine IP-Verbindung besteht. Somit wird eine intuitive Vergabe von Berechtigungsnachweisen ermöglicht, welche einen vereinfachten Datenzugriff in paketvermittelten Netzen ermöglicht.

Insbesondere ist hierbei die erste IP-Verbindung eine VoIP-Verbindung, wobei als IP-Zieladresse die aktuelle IP-Adresse des Gesprächspartners extrahiert wird. Der Berechtigungsnachweis kann beispielsweise die aktuelle IP-Adresse der lokalen Speichereinheit sowie eine dieser Speichereinheit zugeordnete Freigabeinformation beinhalten. Der Berechtigungsnachweis kann ferner eine Benutzerkennung, ein Kennwort und/oder eine Ablaufzeit für den Datenzugriff enthalten, wodurch eine erhöhte Sicherheit für den IP-basierten Datenzugriff realisiert werden kann.

Die Freigabeinformationen können beispielsweise eine lokale Adressierung und insbesondere einen Pfad-, Ordner- und/oder Dateinamen aufweisen. Hierdurch lassen sich auch lediglich Teilabschnitte eines lokalen Medien-Servers bzw. einer lokalen Speichereinheit für einen Datenzugriff freigeben, was einen Benutzerkomfort weiter erhöht.

Der Berechtigungsnachweis kann eine SIP-URI aufweisen, die als Speichereinheit zugeordnet ist. Dadurch kann der Zugang zu den Medieninhalten auch nach der Beendigung einer ersten IP-Verbindung bzw. der VoIP-Verbindung und einem zwischenzeitlichen Wechsel der IP-Adresse ermöglicht werden.

Die Triggereinheit kann vorzugsweise außerhalb des Gateways und insbesondere in einem daran angeschalteten Mobilteil softwaremäßig implementiert sein. Auf diese Weise können insbesondere DECT-basierte (Digital European Cordless Telecommunication) Telekommunikationsendgeräte zum Auslösen der Berechtigungs- bzw. Freigabenachricht verwendet werden, wodurch eine Benutzerakzeptanz erhöht wird.

Ferner kann eine Berechtigungsnachweis-Speichereinheit zum Speichern von empfangenen Berechtigungsnachweisen vorgesehen sein sowie eine Medien-Zugriffseinheit zum Aufbauen einer IP-Verbindung und zum Durchführen des IP-basierten Datenzugriffs unter Verwendung eines empfangenen Berechtigungsnachweises. Mit einer derartigen optionalen Ergänzung kann auf einfache Weise unmittelbar der Datenzugriff unter Verwendung von empfangenen Berechtigungsnachrichten realisiert werden.

Vorzugsweise ist die Vorrichtung hierbei in einem Netzwerkknoten bzw. sogenannten Gateway implementiert, wobei insbesondere die lokale Speichereinheit sowie die Triggereinheit auch außerhalb des Gateways implementiert sein kann. Hierdurch ergeben sich modular aufzubauende Systeme.

In einer Ausführungsform ist die Vorrichtung zur Freigabe von lokalen Dateninhalten **dadurch gekennzeichnet, dass** die lokale Speichereinheit ein lokaler Medien-Server, insbesondere zum Speichern von Bild-, Audio- und/oder Videodaten, ist.

In einer weiteren Ausführungsform ist die Vorrichtung zur Freigabe von lokalen Dateninhalten **dadurch gekennzeichnet, dass** die Auswerteeinheit eine VoIP-Verbindung auswertet und als IP-Zieladresse die aktuelle IP-Adresse des Gesprächspartners extrahiert.

In einer weiteren Ausführungsform ist die Vorrichtung **dadurch gekennzeichnet, dass** der Berechtigungsnachweis eine der aktuellen IP-Adresse der lokalen Speichereinheit zugeordnete Freigabeinformation aufweist.

In einer weiteren Ausführungsform ist die Vorrichtung **dadurch gekennzeichnet, dass** der Berechtigungsnachweis eine Benutzerkennung aufweist.

In einer weiteren Ausführungsform ist die Vorrichtung **dadurch gekennzeichnet, dass** der Berechtigungsnachweis ein Kennwort aufweist.

In einer weiteren Ausführungsform ist die Vorrichtung **dadurch gekennzeichnet, dass** der Berechtigungsnachweis eine Ablaufzeit für den Datenzugriff aufweist.

In einer weiteren Ausführungsform ist die Vorrichtung **dadurch gekennzeichnet, dass** die Freigabeinformation eine lokale Adressierung, insbesondere einen Pfad-, Ordner- und/oder Dateinamen, aufweist.

In einer weiteren Ausführungsform ist die Vorrichtung **dadurch gekennzeichnet, dass** der Berechtigungsnachweis eine SIP-URI aufweist, die der lokalen Speichereinheit zugeordnet ist.

In einer weiteren Ausführungsform ist die Vorrichtung **dadurch gekennzeichnet, dass** die Triggereinheit außerhalb des Gateways, insbesondere in einem daran angeschalteten Mobilteil, implementiert ist und/oder dass die Triggereinheit softwaremäßig realisiert ist.

Hinsichtlich des Verfahrens wird zunächst eine IP-Zieladresse aus einer ersten IP-Verbindung extrahiert und ein Berechtigungsnachweis für den Datenzugriff auf die lokalen Dateninhalte bereitgestellt. Auf der Grundlage des Berechtigungsnachweises und der extrahierten IP-Zieladresse wird anschließend eine Berechtigungsnachricht erzeugt und die Berechtigungsnachricht versendet, wenn ein Triggersignal vorliegt bzw. erfasst wird. Somit kann ein Benutzer auf äußerst einfache und leicht bedienbare Art und Weise eine Freigabe für einen IP-basierten Datenzugriff für seine lokalen Dateninhalte ermöglichen.

Die so erzeugte Berechtigungsnachricht kann weiterhin empfangen und zumindest der Berechtigungsnachweis extrahiert werden, wobei ferner ein Speichern des empfangenen Berechtigungsnachweises durchgeführt werden kann. Ferner kann ein IP-basierter Datenzugriff unter Verwendung der empfangenen und optional gespeicherten Berechtigungsnachweise beim Anbieter der lokalen Dateninhalte durchgeführt werden.

In einer weiteren Ausführungsform des Verfahrens weisen die lokalen Dateninhalte Bild-, Audio- und/oder Videodaten auf.

In einer weiteren Ausführungsform des Verfahrens ist die erste IP-Verbindung eine VoIP-Verbindung und als IP-Zieladresse wird die aktuelle IP-Adresse des Gesprächsteilnehmers extrahiert.

In einer weiteren Ausführungsform des Verfahrens weist der Berechtigungsnachweis eine der aktuellen IP-Adresse der lokalen Speichereinheit zugeordnete Freigabeinformation auf.

In einer weiteren Ausführungsform des Verfahrens weist der Berechtigungsnachweis eine Benutzerkennung auf.

In einer weiteren Ausführungsform des Verfahrens weist der Berechtigungsnachweis ein Kennwort auf.

In einer weiteren Ausführungsform des Verfahrens weist der Berechtigungsnachweis eine Ablaufzeit für den Datenzugriff auf.

In einer weiteren Ausführungsform des Verfahrens weist die Freigabeinformation eine lokale Adressierung, insbesondere einen Pfad-, Ordner- und/oder Dateinamen, auf.

In einer weiteren Ausführungsform des Verfahrens weist der Berechtigungsnachweis eine SIP-URI auf, die der lokalen Speichereinheit zugeordnet ist.

In einer weiteren Ausführungsform des Verfahrens wird das Triggersignal von einem Telekommunikationsendgerät, insbesondere einem Mobilteil, erzeugt.

Die Erfindung betrifft ferner ein Kommunikationssystem zur Durchführung der vorstehend beschriebenen Verfahrensschritte sowie ein digitales Speichermedium mit elektronisch auslesbaren Steuersignalen, die so mit einem programmierbaren Computersystem zusammenwirken können, dass die vorstehend beschriebenen Verfahrensschritte ausgeführt werden können. Ferner betrifft die Erfindung ein Computer-Programm-Produkt mit auf einem maschinenlesbaren Träger gespeicherten Programmcode zur Durchführung der vorstehend beschriebenen Verfahrensschritte, wenn das Programm-Produkt auf einem Computer abläuft. Ferner betrifft die vorliegende Erfindung ein Computer-Programm mit Programmcode zur Durchführung der vorstehend beschriebenen Verfahrensschritte, wenn das Programm auf einem Computer abläuft.

In den weiteren Ansprüchen sind weitere vorteilhafte Ausgestaltungen der Erfindung gekennzeichnet.

Die Erfindung wird nachfolgend anhand von Ausführungsbeispielen unter Bezugnahme auf die Zeichnung näher beschrieben.

Es zeigen:
- Fig. 1: eine vereinfachte Blockdarstellung eines Kommunikationssystems mit einem Gateway, in dem die vorliegende Erfindung implementiert sein kann;
- Fig. 2: eine vereinfachte Blockdarstellung einer erfindungsgemäßen Freigabevorrichtung und einem korrespondierenden Gateway;
- Fig. 3: eine vereinfachte Darstellung von jeweiligen IPNachrichten, wie sie gemäß der vorliegenden Erfindung verwendet werden können; und
- Fig. 4: ein vereinfachtes Flussdiagramm zur Veranschaulichung von Verfahrensschritten des erfindungsgemäßen Verfahrens.

Die Erfindung wird nachfolgend anhand einer Vorrichtung und einem Verfahren zur Freigabe von lokalen Dateninhalten beschrieben, bei dem eine bereits bestehende VoIP-Verbindung (Voice over IP-Verbindung) zwischen einem Anbieter der Dateninhalte und einem Zugreifenden auf die Dateninhalte genutzt wird, um die erforderlichen "credentials" bzw. Benutzungsnachweise auf Knopfdruck benutzerfreundlich auszutauschen und somit den Zugang zu den Daten- bzw. Medieninhalten automatisch zu ermöglichen. Selbstverständlich können anstelle der VoIP-Verbindung auch andere Verbindungen als erste IP-Verbindung verwendet werden.

Erfindungsgemäß wird die Tatsache genutzt, dass während einer VoIP-Verbindung die öffentlichen IP-Adressen beider Parteien bekannt sind. Somit kann beispielsweise per Knopfdruck am PC, Telefon und/oder Gateway der Anbietende seinen Medien-Server bzw. den Medien-Server seines Gateways veranlassen, eine parallele zweite Verbindung mit z.B. dem Medien-Server des Gateways des Zugreifenden aufzubauen. Mit Hilfe eines definierten Protokolls kann anschließend ein hinterlegtes oder automatisch generiertes "credential" bzw. Berechtigungsnachweis ausgetauscht werden. Dieser Berechtigungsnachweis kann im Medien-Server des Zugreifenden gespeichert werden. Mit den übermittelten Informationen kann anschließend z.B. im Web-Interface des Medien-Servers des Zugreifenden ein neuer Eintrag (Link) generiert werden, der auf die Medieninhalte des Anbieters zeigt. Aktiviert der Zugreifende anschließend diesen Link, so werden die gespeicherten Berechtigungsnachweise zur Authentisierung beim Anbieter bzw. dessen Medien-Server genutzt und nach erfolgreicher Authentisierung der Zugang zu den Medieninhalten gewährt. Auf diese Weise kann ein IP-basierter Datenzugriff stark vereinfacht und insbesondere sehr benutzerfreundlich realisiert werden.

Um den Zugang zu den Medieninhalten auch nach einer Beendigung einer VoIP-Verbindung und einem zwischenzeitlichen Wechsel der IP-Adresse des Anbieters zu ermöglichen, kann mit dem Berechtigungsnachweis auch die sogenannte SIP-URI (Session Initiated Protocol Uniform Resource Identifier) des Anbieters übermittelt werden. Mit Hilfe dieser URI (Uniform Resource Identifier) kann die neue öffentliche IP-Adresse ermittelt und somit ein vereinfachter IP-basierter Datenzugriff ermöglicht werden.

Die vorliegende Erfindung ermöglicht somit eine bequeme und nicht fehleranfällige Methode, den verschiedensten Nutzern gezielt einen Zugang zum eigenen bzw. lokalen Medien-Server zu gewähren.

Insbesondere die Auswertung einer bereits existierenden VoIP-Verbindung ermöglicht einen besonders einfachen Zugang einer externen Kommunikationseinheit auf das eigene Gateway bzw. den eigenen Medien-Server.

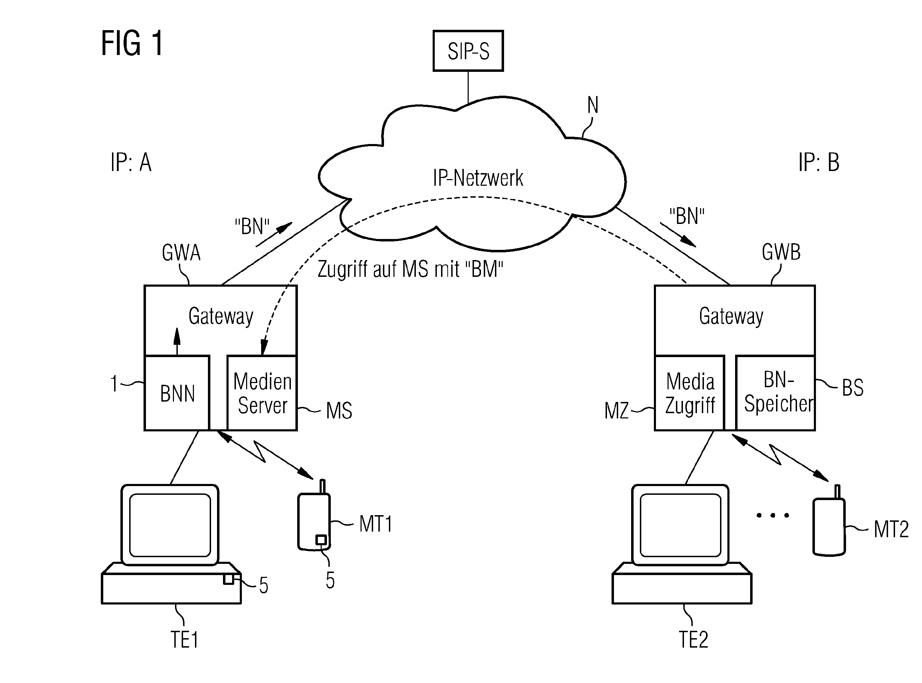

Fig. 1 zeigt eine vereinfachte Blockdarstellung eines Kommunikationssystems zur Veranschaulichung der erfindungsgemäßen Vorrichtung bzw. des erfindungsgemäßen Verfahrens.

Gemäß Fig. 1 ist ein Gateway bzw. Netzwerkknoten GWA eines Anbieters von lokalen Dateninhalten über ein paketvermitteltes Netzwerk N mit einem Gateway bzw. Netzwerkknoten GWB eines auf die Dateninhalte zugreifenden Nutzers verbunden. Das paketvermittelte Netz N ist insbesondere ein IP-Netzwerk (Internet Protocol), wie beispielsweise das Internet. Ferner kann das paketvermittelte Netz N eine Servereinheit bzw. einen Verbindungsserver SIP-S aufweisen oder anbinden, welche(r) insbesondere zur Realisierung der eingangs genannten VoIP-Verbindung die Realisierung des Session Initiated Protocol SIP unterstützt.

Gemäß Fig. 1 können die lokalen Dateninhalte, wie beispielsweise Bild-, Audio- und/oder Videodaten, in einem lokalen Medien-Server MS abgelegt sein, der als lokale Speichereinheit im Gateway GWA implementiert sein kann. Selbstverständlich kann die lokale Speichereinheit bzw. der lokale Medien-Server MS auch außerhalb des Gateways GWA angeordnet sein und lediglich über eine standardisierte oder interne Schnittstelle (nicht dargestellt) mit dem Gateway GWA und somit dem paketvermittelten Netz N verbunden sein. Ferner kann an das Gateway GWA des die lokalen Dateninhalte anbietenden Nutzers ein weiteres Telekommunikationsendgerät, wie beispielsweise ein PC TE1 oder ein mobiles Telekommunikationsgerät bzw. Mobilteil MT1, angeschaltet sein. Gemäß Fig. 1 besitzt das Gateway GWA bzw. dessen Medien-Server MS die öffentliche IP-Adresse "IP:A", welche sich beispielsweise nach 24 Stunden ändern kann.

Zugriffsseitig kann sich das entsprechende Gateway GWB befinden, wobei jedoch lediglich die für den Datenzugriff notwendigen Elemente dargestellt sind. Hierbei kann eine Berechtigungsnachweis-Speichereinheit BS die vom Anbieter bzw. Gateway GWA empfangenen Berechtigungsnachweise abspeichern und eine Medien-Zugriffseinheit MZ einen IP-basierten Datenzugriff auf die lokalen Dateninhalte des Medien-Servers MS im Gateway GWA ermöglichen. Selbstverständlich kann auch das zugriffsseitige Gateway GWB die (nicht dargestellten) Funktionskomponenten des Gateways GWA enthalten und umgekehrt kann das anbieterseitige Gateway GWA auch die (nicht dargestellten) Funktionseinheiten des Gateways GWB enthalten. Wiederum kann auch das zugriffsseitige Gateway GWB an Telekommunikationsendgeräte, wie beispielsweise einen PC TE2 sowie ein Mobilteil MT2, angeschaltet sein, wobei für die Mobilteile MT1 und MT2 insbesondere Schnurlostelefone gemäß dem DECT-Standard (Digital European Cordless Telecommunication) oder CAT-iq-Standard (Cordless Advanced Technology-internet and quality) verwendet werden können.

Gemäß Fig. 1 kann beispielsweise mittels des Servers SIP-S eine VoIP-Verbindung (Voice over IP) vom Mobilteil MT1 des Anbieters von Dateninhalten zum Mobilteil MT2 des auf die Dateninhalte Zugreifenden realisiert werden. Während dieses Telefongesprächs kann beispielsweise der Nutzer des Mobilteils MT2 den Wunsch äußern auf bestimmte lokale Dateninhalte des Nutzers von Mobilteil MT2 zuzugreifen, um sich beispielsweise die Bilder oder Videos vom gemeinsamen Urlaub herunter zu laden. Über eine beispielsweise am Mobilteil MT1 implementierte Triggereinheit 5 kann nunmehr der Nutzer von Mobilteil MT1 bzw. des Anbieters der lokalen Dateninhalte auf dem Medien-Server MS einen entsprechenden Berechtigungsnachweis BN erzeugen und über das paketvermittelte Netz N an das Gateway GWB versenden. Dieser empfangene Berechtigungsnachweis BN kann anschließend beispielsweise auf der Berechtigungsnachweis-Speichereinheit BS im Gateway GWB des Zugreifenden abgelegt werden. Unter Verwendung der Media-Zugriffseinheit MZ kann nunmehr mittels des empfangenen Berechtigungsnachweises BN ein IP-basierter Datenzugriff auf die im Medien-Speicher MS gespeicherten lokalen Dateninhalte des Anbieters durchgeführt werden und die vom Nutzer des Mobilteils MT1 bzw. Gateways GWA freigegebenen Dateninhalte können auf das Gateway GWB herunter geladen werden. Abschließend können diese Dateninhalte beispielsweise im PC TE2 ausgegeben, angezeigt oder anderweitig verwaltet werden.

Gemäß Fig. 1 kann die Triggereinheit 5 zum Auslösen des Versendevorgangs für den Berechtigungsnachweis BN nicht nur im Mobilteil MT1 sondern auch im PC TE1 und grundsätzlich auch im Gateway GWA (nicht dargestellt) realisiert werden.

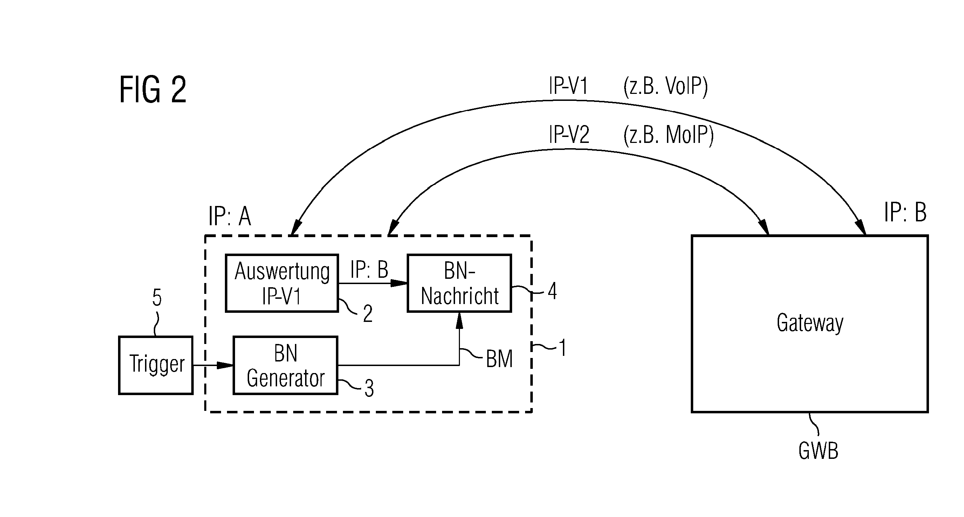

Fig. 2 zeigt eine vereinfachte Blockdarstellung einer Freigabevorrichtung 1, wie sie beispielsweise im Gateway GWA eines Anbieters von lokalen Dateninhalten implementiert sein kann. Selbstverständlich kann diese Freigabevorrichtung 1 auch außerhalb des Gateways realisiert sein. Ferner kann die Freigabevorrichtung 1 auch auf der Seite des zugreifenden Gateways GWB realisiert sein, was jedoch zur Vereinfachung der Figuren nicht dargestellt ist. In Fig. 2 ist ferner die lokale Speichereinheit zur Realisierung des Medienspeichers und zum Speichern der lokalen Dateninhalte nicht dargestellt, da sich die Fig. 2 zunächst nur auf den reinen Freigabevorgang bezieht.

Gemäß Fig. 2 besitzt die Freigabevorrichtung 1 eine Auswerteeinheit 2 zum Auswerten einer ersten IP-Verbindung IP-V1 und zum Extrahieren einer IP-Zieladresse aus der ersten IP-Verbindung. Im vorliegenden Fall kann die erste IP-Verbindung eine VoIP-Verbindung (Voice over IP) darstellen, weshalb die Auswerteeinheit die aktuelle öffentliche IP-Adresse IP:B des Gesprächsteilnehmers bzw. des Gateways GWB als IP-Zieladresse aus der ersten IP-Verbindung extrahiert. Weiterhin besitzt die Freigabevorrichtung 1 eine Berechtigungsnachweis-Erzeugungseinheit 3, die einen Berechtigungsnachweis BN für den Datenzugriff auf die lokale Speichereinheit MS erzeugt. Eine Berechtigungsnachricht-Erzeugungseinheit 4 erzeugt auf der Grundlage dieses Berechtigungsnachweises BN und der aus der ersten IP-Verbindung extrahierten IP-Zieladresse IP:B eine Berechtigungsnachricht. Diese Berechtigungsnachricht wird nach Betätigung der Triggereinheit 5 über eine zweite IP-Verbindung IP-V2, welche von der ersten IP-Verbindung IP-V1 verschieden ist, an das Gateway GWB des Gesprächsteilnehmers versendet. Diese zweite IP-Verbindung stellt hierbei eine reine Datenverbindung dar und kann beispielsweise als MoIP (Media over IP) betrachtet werden.

Obwohl die Triggereinheit 5 gemäß Fig. 2 die Berechtigungsnachweis-Erzeugungseinheit 3 ansteuert, kann sie in gleicher Weise auch direkt die Berechtigungsnachricht-Erzeugungseinheit 4 oder die Auswerteeinheit 2 ansteuern oder an einem sonstigen Ort den Versendevorgang der erzeugten Berechtigungsnachricht über die zweite IP-Verbindung IP-V2 auslösen. Die Triggereinheit 5 kann beispielsweise durch eine einfache Taste realisiert werden, welche sich gemäß Fig. 1 im Mobilteil MT1, im PC TE1 oder am Gateway GWA befindet. Insbesondere kann die Triggereinheit 5 softwaremäßig realisiert sein, wodurch sie als sogenannter Soft-Key einfach in dem Mobilteil MT1 realisiert werden kann.

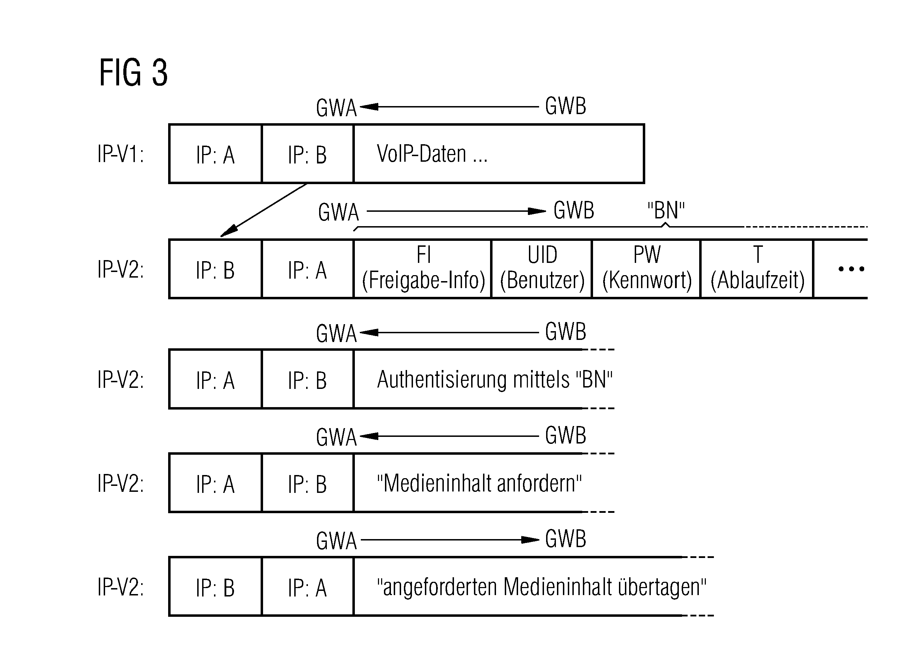

Die Funktionsweise der Erfindung wird nachfolgend anhand der in Fig. 3 gezeigten IP-Nachrichten beispielhaft beschrieben, wobei die IP-Nachrichten im Wesentlichen auf den in Fig. 2 dargestellten ersten und zweiten IP-Verbindungen IP-V1 und IP-V2 übertragen werden.

Gemäß Fig. 3 kann zunächst auf der ersten IP-Verbindung IP-V1 eine VoIP-Verbindung (Voice over IP) realisiert werden, wobei eine vom Gateway GWB gesendete IP-Nachricht als Zieladresse IP:A des Anbieters der lokalen Dateninhalte, ferner als Absenderadresse IP:B seine eigene öffentliche IP-Adresse und im Nutzdatenfeld die VoIP-Daten der VoIP-Verbindung aufweist. Erfindungsgemäß kann die Auswerteeinheit die erste IP-Verbindung IP-V1 bzw. die auf dieser Verbindung empfangenen IP-Nachrichten derart auswerten, dass die Absenderadresse IP:B als neue IP-Zieladresse IP:B für die zu versendende Berechtigungsnachricht extrahiert wird. Diese Berechtigungsnachricht wird gemäß Fig. 3 über eine zweite IP-Verbindung IP-V2 versendet und enthält ferner die Absenderadresse IP:A des Anbieters der lokalen Dateninhalte sowie den Berechtigungsnachweis BN in den nachfolgenden Datenfeldern.

Gemäß Fig. 3 kann der über die zweite IP-Verbindung IP-V2 versendete Berechtigungsnachweis BN eine Freigabeinformation FI, eine Benutzerkennung UID, ein Kennwort PW, eine Ablaufzeit T für den Datenzugriff usw. aufweisen. In der Freigabeinformation FI können beispielsweise eine lokale Adressierung und insbesondere ein Pfad-, Ordner- und/oder ein Dateiname für die jeweiligen Dateninhalte abgelegt sein. Im einfachsten Falle bedeutet ein Angabe eines derartigen Pfad-, Ordner-und/oder Dateinamens die vollständige Freigabe der darunter befindlichen Dateninhalte. Selbstverständlich können auch explizite Freigabeinformationen in einem derartigen Feld, beispielsweise ein vollständiges Inhaltsverzeichnis des Medien-Servers MS, abgelegt sein. Eine derartige Freigabeinformation FI kann demzufolge vom Nutzer über den PC TE1 selektiv ausgewählt oder modifiziert werden.

Die Benutzerkennung bzw. User Identification UID sowie das Kennwort bzw. Passwort PW stellen die üblichen Inhalte eines Berechtigungsnachweises BN dar, welche es auch einem lokalen Nutzer ermöglichen, auf die Dateninhalte des lokalen Medien-Servers MS zuzugreifen. Diese optionalen Informationen können grundsätzlich auch fehlen, wobei jedoch ein Sicherheitsaspekt dadurch verringert wird.

Mit der Ablaufzeit T für den jeweiligen Datenzugriff kann ferner eine Zeitdauer definiert werden, in der ein jeweiliger Zugreifender auf die in der Freigabeinformation FI angegebenen Dateninhalte zeitlich zugreifen kann. Nach Ablauf einer derartigen Zeit erlischt die Freigabe und ein Datenzugriff ist nicht länger möglich. Diese optionale Ablaufzeit T erhöht weiterhin eine Sicherheit bei der Freigabe von IP-basierten Datenzugriffen auf lokale Dateninhalte. Der reine Freigabevorgang ist mit Versenden dieser Berechtigungsnachricht abgeschlossen.

Die weiteren IP-Nachrichten gemäß Fig. 3 veranschaulichen nunmehr einen IP-basierten Datenzugriff auf die lokalen Dateninhalte im Medien-Server MS bzw. der lokalen Speichereinheit. Gemäß Fig. 1 können nunmehr der über die zweite IP-Verbindung IP-V2 empfangene Berechtigungsnachweis BN sowie die zugehörige IP-Adresse IP:A des Absenders und somit der lokalen Speichereinheit MS nachfolgende Datenzugriffe über die zweite IP-Verbindung IP-V2 oder eine weitere IP-Verbindung ermöglichen. Gemäß Fig. 3 wird hierbei die zweite IP-Verbindung IP-V2 für den Datenzugriff verwendet, wobei wiederum unter Verwendung der Absenderadresse IP:A nunmehr diese öffentliche IP-Adresse als Zieladresse für den Datenzugriff verwendet wird und im Datenfeld die Authentisierungsdaten mittels des empfangenen Berechtigungsnachweises BN übertragen werden. In einer nicht dargestellten weiteren IP-Nachricht kann eine derartige Authentisierung ferner als erfolgreich bestätigt werden, was jedoch nicht zwingend erforderlich ist, da auch andere Authentisierungsverfahren grundsätzlich möglich sind, bei denen eine explizite Bestätigung nicht erfolgt.

In einer weiteren IP-Nachricht können nach erfolgter Authentisierung nunmehr vom Gateway GWB an das Gateway GWA bzw. den zugehörigen Medien-Server MS die Medieninhalte über die beispielsweise zweite IP-Verbindung IP-V2 angefordert werden. Sofern die Authentisierung erfolgreich war und gegebenenfalls eine Ablaufzeit für den Datenzugriff noch nicht erreicht wurde, wird abschließend über beispielsweise die zweite IP-Verbindung IP-V2 schließlich der angeforderte Medieninhalt vom Gateway GWA an den Zugreifenden Gateway GWB übertragen. Der Zugreifende erhält somit auf äußerst einfache und benutzerfreundliche Art und Weise einen IP-basierten Datenzugriff auf die lokalen Dateninhalte des Anbieters bzw. dessen Gateways GWA. Eine aufwändige Konfiguration von Diensten zur Verwaltung von dynamischen IP-Adressen ist somit nicht länger erforderlich. Ferner ist ein mühsames und fehleranfälliges Übertragen von Berechtigungsnachweisen beispielsweise per e-Mail nicht länger erforderlich, was eine Bedienung auch für technisch wenig versierte Nutzer stark vereinfacht.

Erfindungsgemäß kann das zugreifende Gateway GWB die empfangenen Benutzungsnachweise BN nicht nur speichern sondern gegebenenfalls auch verwalten und insbesondere anderen Applikationen innerhalb des Gateways oder des lokalen Netzes des Gateways GWB zur Verfügung stellen. Ferner wird erfindungsgemäß auch eine sogenannte Konferenz-Freigabe unterstützt, wobei bei Realisierung einer sogenannten Konferenzschaltung mit mehr als zwei Gesprächsteilnehmern allen weiteren Gesprächsteilnehmern bzw. den zugehörigen Gateways (nicht dargestellt) jeweilige Berechtigungsnachrichten mit jeweiligen Berechtigungsnachweisen BN zugesendet werden. Somit können auch Gruppen-Freigaben realisiert werden.

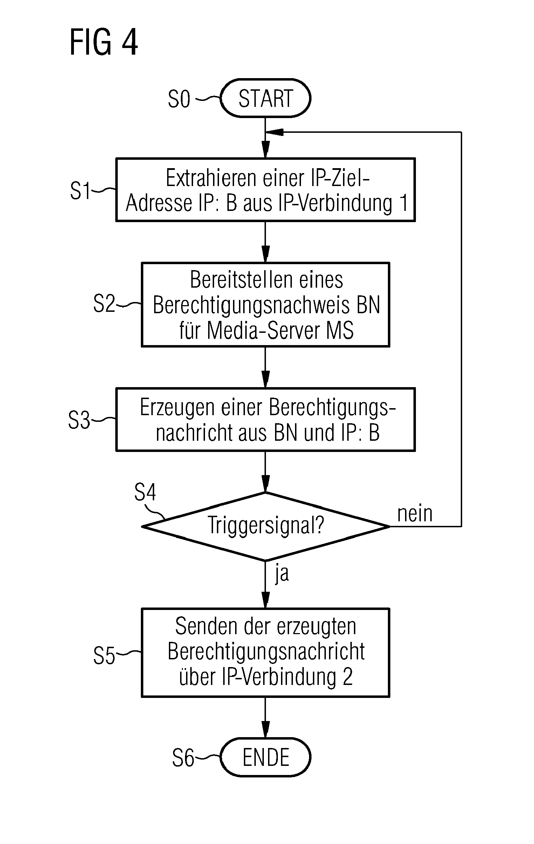

Figur 4 zeigt ein vereinfachtes Flussdiagramm zur Veranschaulichung von Verfahrensschritten zur Freigabe von lokalen Dateninhalten für einen IP-basierten Datenzugriff gemäß der vorliegenden Erfindung.

Gemäß Fig. 4 wird nach einem Start in Schritt S0 zunächst eine IP-Zieladresse IP:B aus einer ersten IP-Verbindung IP-V1 extrahiert. Ferner kann in einem Schritt S2 ein Berechtigungsnachweis BN für den IP-basierten Datenzugriff auf die lokalen Dateninhalte im Media-Server MS des Anbieters bereitgestellt werden. Wie vorstehend bereits beschrieben wurde, kann im Berechtigungsnachweis BN eine der aktuellen IP-Adresse der lokalen Speicher-Einheit MS zugeordnete Freigabeinformation FI enthalten sein. Ferner kann der Berechtigungsnachweis BN eine Benutzerkennung UID, ein Kennwort PW, eine Ablaufzeit T für einen Datenzugriff usw. aufweisen. Die Freigabeinformation FI kann insbesondere Informationen hinsichtlich einer lokalen Adressierung der lokalen Speicher-Einheit aufweisen und insbesondere einen Pfad-, Ordner- und/oder einen Dateinamen enthalten. Grundsätzlich können die Schritte S1 und S2 auch vertauscht werden oder gleichzeitig ausgeführt werden.

In einem nachfolgenden Schritt S3 wird gemäß Fig. 4 eine Berechtigungsnachricht auf der Grundlage des Berechtigungsnachweises BN und der extrahierten IP-Zieladresse IP:B erzeugt, welche die Absender-IP-Adresse eines Gesprächteilnehmers (z.B. bei VoIP) darstellt. In einem Schritt S4 kann überprüft werden, ob ein Triggersignal vorliegt bzw. erfasst wurde oder nicht. Solange kein Triggersignal zum Versenden der Berechtigungsnachricht von beispielsweise der Triggereinheit 5 vorliegt, kann beispielsweise zum Schritt S1 zurück verzweigt werden. Sobald jedoch ein Triggersignal erfasst wird, wird in Schritt S4 zu Schritt S5 verzweigt und nunmehr die Berechtigungsnachricht über eine zweite IP-Verbindung IP-V2 versendet. Somit erhält der Zugreifende alle für einen Datenzugriff notwendigen Informationen und insbesondere die aktuelle IP-Adresse mit zugehörigem Berechtigungsnachweis BN für die lokalen Dateninhalte. Das Verfahren endet in einem Schritt S6.

Optional können in nicht dargestellten weiteren Verfahrensschritten nunmehr die Berechtigungsnachricht empfangen und zumindest der Berechtigungsnachweis BN extrahiert werden. Weiterhin kann in einem nicht dargestellten Schritt der empfangene Berechtigungsnachweis gespeichert und gegebenenfalls verwaltet und für weitere Applikationen zur Verfügung gestellt werden. Schließlich kann gemäß einem weiteren nicht dargestellten Verfahrensschritt der IP-basierte Datenzugriff unter Verwendung des empfangenen Berechtigungsnachweises BN durchgeführt werden und schließlich die lokalen Dateninhalte über das paketvermittelte Netz N herunter geladen werden.

Die Fig. 4 zeigt folglich ein Flussdiagramm für ein Verfahren und ein Computer-Programm-Produkt gemäß der vorliegenden Erfindung. Es sei darauf hingewiesen, dass jeder Block oder Schritt des Flussdiagramms und jeweilige Kombinationen von Blöcken im Flussdiagramm durch Computer-Programm-Befehle implementiert sein können. Diese Computer-Programm-Befehle können auf einem Computer oder ein anderes programmierbares Gerät geladen werden, um eine Vorrichtung zu erzeugen, wobei die im Computer oder einem programmierbaren Gerät ausgeführten Befehle Mittel zum Implementieren der Funktionsweisen erzeugen, wie sie in den Schritten des Flussdiagramms dargestellt sind. Diese Computer-Programm-Befehle können ebenfalls in einem digitalen Speichermedium, wie beispielsweise einer DVD, CD oder Diskette gespeichert sein, die einen Computer oder ein anderes programmierbares Gerät zur Realisierung einer bestimmten Funktionalität anweist. Darüber hinaus können die Computer-Programm-Befehle bzw. der Programmcode in beispielsweise einem Telekommunikationsnetzwerk herunter geladen werden, um Betriebsschritte hervorzurufen, die auf einem Computer oder einem anderen programmierbaren Gerät ausgeführt werden, um einen Computer-implementierten Prozess zu erzeugen, der die Durchführung der Verfahrensschritte gemäß Fig. 4 ermöglicht.

Die Erfindung umfasst daher ferner ein digitales Speichermedium mit elektronisch auslesbaren Steuersignalen, die so mit einem Computer-System zusammenwirken können, dass sie die Verfahrensschritte gemäß Fig. 4 ausführen können. Ferner bezieht sich die Erfindung auf ein Computer-Programm-Produkt mit auf einem maschinenlesbaren Träger gespeichertem Programmcode zur Durchführung der Verfahrensschritt nach Fig. 4, wenn das Programm auf einem Rechner abläuft. Im Übrigen betrifft die vorliegende Erfindung ein Computer-Programm mit Programmcode zur Durchführung von Verfahrensschritten nach Fig. 4, wenn das Programm auf einem Computer abläuft.

Die vorliegende Erfindung wurde anhand einer VoIP-Verbindung als erster IP-Verbindung beschrieben. Sie ist jedoch nicht darauf beschränkt und umfasst in gleicher Weise alle weiteren IP-Verbindungen, welche eine bereits bestehende erste IP-Verbindung realisieren können.

Bezugszeichenliste:
- 1: Freigabevorrichtung
- 2: Auswerteeinheit
- 3: Berechtigungsnachweis-Erzeugungseinheit
- 4: Berechtigungsnachricht-Erzeugungseinheit
- 5: Triggereinheit
- IP-V1: erste IP-Verbindung
- IP-V2: zweite IP-Verbindung
- GWA, GWB: Gateway
- MS: lokale Speichereinheit
- TE1, TE2: PC
- MT1, MT2: Mobilteil
- MZ: Medien-Zugriffseinheit
- BS: Berechtigungsnachweis-Speichereinheit
- BN: Berechtigungsnachweis
- N: paketvermitteltes Netz
- SIP-S: Verbindungsserver
- A: Anbietender von Dateninhalten
- B: Zugreifender auf Dateninhalte
- S1-S6: Verfahrensschritte

## Patentansprüche

1. Vorrichtung zur Freigabe von lokalen Dateninhalten für einen IP-basierten Datenzugriff mit
einer lokalen Speichereinheit (MS) zum Speichern der lokalen Dateninhalte;
einer Auswerteeinheit (2) zum Auswerten einer ersten IP-Verbindung (IP-V1) und zum Extrahieren einer IP-Zieladresse (IP:B);
einer Berechtigungsnachweis-Erzeugungseinheit (3) zum Erzeugen eines Berechtigungsnachweises (BN) für den Datenzugriff auf die lokale Speichereinheit (MS);
einer Berechtigungsnachricht-Erzeugungseinheit (4) zum Erzeugen einer Berechtigungsnachricht auf der Grundlage des Berechtigungsnachweises (BN) und der extrahierten IP-Zieladresse (IP:B); und
einer Triggereinheit (5) zum Auslösen eines Versendevorgangs der erzeugten Berechtigungsnachricht über eine zweite IP-Verbindung (IP-V2), welche von der ersten IP-Verbindung (IP-V1) verschieden ist.

2. Vorrichtung nach Patentanspruch 1, **dadurch gekennzeichnet, dass** sie in einem Gateway (GW) implementiert ist.

3. Vorrichtung nach Patentanspruch 2, **dadurch gekennzeichnet, dass** die Triggereinheit (5) außerhalb des Gateways (GW), insbesondere in einem daran angeschalteten Mobilteil (MT), implementiert ist.

4. Vorrichtung nach einem der Patentansprüche 2 bis 3, **dadurch gekennzeichnet, dass** die lokale Speichereinheit (MS) außerhalb des Gateways (GW) realisiert ist.

5. Vorrichtung nach einem der Patentansprüche 1 bis 4, **gekennzeichnet durch** eine Berechtigungsnachweis-Speichereinheit (BS) zum Speichern von zumindest einem empfangenen Berechtigungsnachweis (BN).

6. Vorrichtung nach einem der Patentansprüche 1 bis 5, **gekennzeichnet durch** eine Medien-Zugriffseinheit (MZ) zum Aufbauen einer weiteren IP-Verbindung und zum Durchführen des IP-basierten Datenzugriffs unter Verwendung eines empfangenen Berechtigungsnachweises (BN).

7. Verfahren zur Freigabe von lokalen Dateninhalten für einen IP-basierten Datenzugriff mit den Schritten:
Extrahieren (S1) einer IP-Zieladresse (IP:B) aus einer ersten IP-Verbindung (IP-V1);
Bereitstellen (S2) eines Berechtigungsnachweises (BN) für den Datenzugriff auf die lokalen Dateninhalte;
Erzeugen (S3) einer Berechtigungsnachricht auf der Grundlage des Berechtigungsnachweises (BN) und der extrahierten IP-Zieladresse (IP:B); und
Senden (S5) der Berechtigungsnachricht, wenn ein Triggersignal erfasst wird (S4).

8. Verfahren nach Patentanspruch 7, mit dem weiteren Schritt:
Empfangen der Berechtigungsnachricht und Extrahieren zumindest des Berechtigungsnachweises (BN).

9. Verfahren nach Patentanspruch 8, mit dem weiteren Schritt:
Speichern des empfangenen Berechtigungsnachweises (BN).

10. Verfahren nach Patentanspruch 8 oder 9, mit dem weiteren Schritt:
Durchführen des IP-basierten Datenzugriffs unter Verwendung des empfangenen Berechtigungsnachweises (BN).

11. Kommunikationssystem zur Durchführung des Verfahrens nach einem der Patentansprüche 7 bis 10.

12. Digitales Speichermedium mit elektronisch auslesbaren Steuersignalen, die so mit einem programmierbaren Computer-system zusammenwirken können, dass ein Verfahren nach einem der Patentansprüche 7 bis 10 ausgeführt wird.

13. Computer-Programm-Produkt mit auf einem maschinenlesbaren Träger gespeichertem Programmcode zur Durchführung des Verfahrens nach einem der Patentansprüche 7 bis 10, wenn das Programm-Produkt auf einem Computer abläuft.

14. Computer-Programm mit Programmcode zur Durchführung des Verfahrens nach einem der Patentansprüche 7 bis 10, wenn das Programm auf einem Computer abläuft.
